# EUROPÄISCHE PATENTANMELDUNG

(11) **EP 1 715 212 A2**
(43) Veröffentlichungstag der Anmeldung: **25.10.2006**
(21) Anmeldenummer: 06007694.0
(22) Anmeldetag: 12.04.2006
(51) Int. Cl.: F16D 67/02

(54) **Kupplungs-Brems-Kombination**

(30) Priorität: 13.04.2005 DE 102005017173
(71) Anmelder: Ortlinghaus-Werke GmbH, 42929 Wermelskirchen (DE)
(72) Erfinder: Seeger, Herbert, Dipl.-Ing., 32547 Bad Oeynhausen (DE); Meller, Udo, 42929 Wermelskirchen (DE)
(74) Vertreter: Füssel, Michael

(57) **Zusammenfassung**

Die vorliegende Erfindung betrifft eine Kupplungs-Brems-Kombination (1) deren Paarungen von Reibscheiben (2a,2b;3a,3b) sowohl bei der Kupplung (4) als auch bei der Bremse (5) mit dem Kühlmedium Luft mittels eines durch aufgeprägte Druckdifferenz (15;16) erzwungenen Luftmassenstroms gekühlt werden.

## Beschreibung

Die folgende Erfindung betrifft eine Kupplungs-Brems-Kombination nach Oberbegriff des Hauptanspruchs.

Derartige Kupplungs-Brems-Kombinationen sind bekannt (s.z.B. www.ortlinghaus.de).

Derartige Kupplungs-Brems-Kombinationen werden beispielsweise in der Pressentechnik verwandt.

Ein grundsätzliches technisches Problem ist die Kühlung der Reibbeläge, die insbesondere im intermittierenden Betrieb notwendig ist.

Dabei lassen sich hohe Kühlleistungen zwar über flüssigkeitsgekühlte Reibpaarungen erzielen. Dies verlangt allerdings nach entsprechenden Kühlmittelkreisläufen und insbesondere nach einem geschlossenen System.

Man würde den hierdurch entstehenden Kostenblock gerne reduzieren, ohne daß derartige Kupplungs-Brems-Kombinationen der Gefahr von Überhitzung unterliegen.

Im Hinblick auf die Erwärmung der Reibpaarungen kommt es aber insbesondere auch darauf an, hohe Brems- bzw. Kupplungsmomente übertragen zu können, obwohl diese Forderung bei luftgekühlten Kupplungs-Brems-Kombinationen rasch an die thermische Belastungsgrenze der beteiligten Materialien führt.

Es ist daher Aufgabe der vorliegenden Erfindung, die bekannte Kupplungs-Brems-Kombination so weiterzubilden, daß bei lediglich geringen Kosten eine verbesserte Kühlung erzielt wird.

Diese Aufgabe löst die Erfindung mit den Merkmalen des Hauptanspruchs.

Wesentlich für die Erfindung ist zunächst einmal die Erzeugung eines Luftstroms über ein vorbestimmtes Druckpotential vor und hinter den jeweiligen Reibpaarungen von Kupplung bzw. Bremse.

Die Potentialdifferenz sorgt damit zwangsläufig für eine Strömung der Kühlluft durch die Kupplungs-Brems-Kombination, je nachdem, welche der Reibpaarungen gerade geöffnet ist.

Die Kühlung ist insbesondere dann erforderlich, wenn die Reibarbeit geleistet worden ist und die Reibpaartemperatur entsprechend hoch ist. Dann aber ist die betreffende Reibpaarung geschlossen. Der Wärmefluß findet dann aber von der Kupplung/Bremse mit geschlossener Reibpaarung zu Bremse/Kupplung mit geöffneter Reibpaarung statt.

Bei den jeweils komplementär geschlossenen Reibpaarungen der anderen Baugruppe wird aufgrund des Reibschlusses ohnehin dann keine Reibarbeit mehr geleistet und es findet somit auch keine Erwärmung statt, so daß die Kühlung im geschlossenen Zustand der einen Baugruppe über das geöffnete Lamellenpaket der anderen Baugruppe erfolgt.

Die Kühlung der im Reibzustand befindlichen Baugruppe findet aber trotzdem statt, solange zwischen den Reibpaarungen Relativbewegung besteht.

Die Erfindung nutzt daher den Effekt der Kühlung zwischen den Reiblamellen, die noch nicht geschlossen sind bevor der Kühlluftstrom dann bei geschlossenen Reiblamellen dieser Baugruppe über die geöffneten Reiblamellen der anderen Baugruppe geführt wird.

Im Wechselbetrieb, d.h. bei abwechselndem Kuppeln und Bremsen werden die Reibbeläge im jeweils offenen Zustand hervorragend gekühlt, weil die sich beim Bremsvorgang einstellende Wärme zum Ende des Bremsvorgangs am höchsten einstellt, und die Bremsbeläge dann beim Öffnen der Bremse mit dem größtmöglichen Kühlluftstrom beaufschlagt werden während zugleich die Kupplung in ihren Mitnehmerbetrieb geht usw.

Da bei einer Kupplung-Brems-Kombination ein Lamellenpacket immer offen ist, werden Kupplung und Bremse wechselweise in obigem Sinn zwangsgekühlt.

Die Erfindung kann als halbgeschlossenes oder geschlossenes System Verwendung finden.

In jedem Falle jedoch ist eine Zwangsluftkühlung aufgrund der anstehenden Druckdifferenz im Kanalsystem vorgesehen.

Bei einem halbgeschlossenen System tritt aber kein Umlauf der Kühlluft auf, da diese aus der Umgebung ständig erneuert herangeführt wird.

Berücksichtigt man darüber hinaus, daß stets ein Abrieb des Reibbelags erfolgt, lassen sich mit den Merkmalen der Ansprüche 2 und 3 erhebliche Vorteile erzielen.

Der staubförmige Abrieb der Kupplungsbeläge wird nämlich im Staubfilter, und je nach Partikelgröße im Feinstaubfilter angereichert und tritt nicht in die Umgebungsluft aus.

Darüber hinaus kann auch vor dem Zutritt der Kühlluft in das Kanalsystem eine Filteranordnung vorgesehen sein.

Diese Maßnahme bietet den Vorteil, daß vom Kühlluftstrom mitgeführte Partikel in der Filteranordnung hängenbleiben und nicht in das System der Reibbeläge gelangen.

Die für den Kühlluftstrom notwendige Potentialdifferenz kann entweder über eingangsseitig zugeführte Druckluft oder ausgangsseitig angelegten Unterdruck erzeugt werden.

Unter Druckluft sind Drücke zu verstehen, die oberhalb des Luftdrucks der Umgebung liegen.

Unterdruck im Sinne der Erfindung weist einen Wert auf, der unterhalb des Luftdrucks der Umgebung liegt.

Den Merkmalen des Anspruchs 7 kommt besondere Bedeutung zu.

Bei diesem Kanalsystem wird die kalte Zuluft von innen nach außen sowohl durch die Reibbeläge der Kupplung als auch die Reibbeläge der Bremse geführt.

Der Luftstrom folgt damit der Richtung der Fliehkräfte. Die Haftbedingungen des Luftstroms an den rotierenden Reibbelägen unterstützen den Fliehkrafteffekt und unterwerfen darüber hinaus die durch Abrieb entstehenden Partikelteilchen ebenfalls dem Fliehkrafteffekt, so daß die Richtung des Luftmassenstroms prinzipiell mit der ebenfalls nach radial auswärts gerichteten Flugbahn der Abriebteilchen übereinstimmt.

Zweckmäßigerweise wird dabei jedem Ax5ialbereich, wo eine Reibpaarung zusammentrifft, ein separater Verteilerkanal zugeordnet. Die einzelnen Verteilerkanäle werden von einem gemeinsamen Sammelkanal aus gespeist, welcher über das axialorientierte Zuluft-Kanal-System mit der notwendigen Kühlluft beaufschlagt wird.

Von besonderem Vorteil ist die Anordnung zumindest eines Axialkanals im Zentrum der Maschinenwelle, weil dann die mit dem Zuluftanschluß versehene Drehdurchführung die geringste Relativgeschwindigkeit zwischen stillstehendem und rotierendem Bauteil aufweist.

Die Erfindung kann prinzipiell dadurch realisiert werden, daß die Kühlluft aus der Maschinenhalle entnommen und, vorzugsweise nach passieren des Filters/Feinstaubfilters, wieder in die Maschinenhalle entlassen wird.

Andererseits kann die Erfindung auch Realisierung finden in einem geschlossenen System, in welchem der Kühlluftmassenstrom ständig zirkuliert, wobei zweckmäßigerweise zur Vermeidung von einer Anreicherung des Abriebs ebenfalls ein Staubfilter/Feinstaubfilter vorgesehen sein soll.

In der Verwendung der Kupplung-Brems-Kombination für die Pressentechnik ist darüber hinaus der Sicherheitsaspekt zu erfüllen.

Aus den Merkmalen des Anspruchs 14 ergibt sich eine hierfür geeignete Ausführungsform.

Darüber hinaus kommt den Merkmalen des Anspruchs 15 eine erhöhte Bedeutung zu.

Reibflächenpaarungen, die einerseits aus organischem Material und andererseits aus hochtemperaturfähigem Reibwerkstoff wie z.B. Aluminiumkeramik oder Kohlefaserverbundwerkstoff o.ä. bestehen, lassen höhere Betriebstemperaturen zu als Reibpaarungen aus organischem Material einerseits und Stahl andererseits.

Da zudem die vorliegende Erfindung für eine bessere Kühlung der Kupplungs-Brems-Kombination sorgt, dient eine Reibpaarung unter Verwendung z.B. von Aluminiumkeramik oder CFK oder anderen modernen Reibstoffen folglich bei vergleichbarer Reibleistung auch einer kleineren Bauweise.

Die damit reduzierte Massenträgheit der Kupplungs-Brems-Kombination resultiert in einer um den Faktor 8 bis 10 verminderbaren Eigenträgheit der gesamten Baugruppe bei ansonsten vergleichbaren Leistungsdaten.

Dabei ermöglichen die höheren Temperaturen der Reibwerkstoffe aber auch höhere Reibleistungen, wobei das verbesserte Kühlsystem nach vorliegender Erfindung zu einem verlangsamten Temperaturanstieg bis hin zu einer zeitlich verzögerten Maximaltemperatur führt.

Im folgenden wird die Erfindung anhand eines Ausführungsbeispiels näher erläutert.

### Es zeigt:

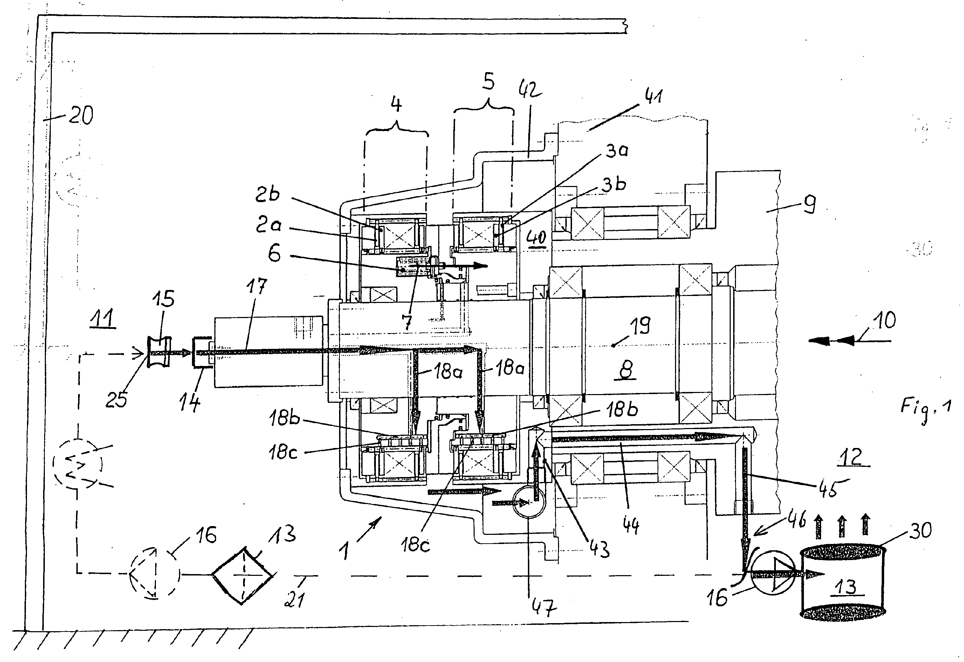

- Fig.1: ein erstes Ausführungsbeispiel der Erfindung.

Figur 1 zeigt eine Kupplungs-Brems-Kombination 1 nach vorliegender Erfindung.

Derartige Kupplungs-Brems-Kombination 1 besitzt Paarungen von Reibscheiben 2a,3b für die Bremse 5 bzw. 3a,3b für die Kupplung 4.

Die jeweils zugeordneten Reibscheiben sind abwechselnd so angeordnet, daß sie einerseits mit der Maschinenwelle 8 und andererseits mit dem Maschinengehäuse 9 bzw. dem Maschinenabtrieb 10 drehfest verbunden sind.

Durch Zusammenpressen der Reibpaarungen, jeweils bestehend aus Reibscheiben 2a-2b bzw. 3a-3b, kommt der Reibschluß zustande und die jeweilige Baugruppe greift.

Im vorliegenden Fall handelt es sich bei der Bremse 5 um eine sogenannte Sicherheitsbremse, die in der Schließrichtung 7 von einem Federpaket 6 beaufschlagt wird.

Entgegen der Schließrichtung 7 des Federpakets 6 wirkt in an sich bekannter Weise eine druckmittelbetätigte Baugruppe zum Belüften der Bremse 5 und - hier - zum gleichzeitigen Schließen der Kupplung.

Für den Fall des Hydraulikausfalls wird allerdings das Federpaket 6 die Bremse 5 in Schließrichtung 7 beaufschlagen und zum Stillstand der Anlage führen.

Insoweit wird auf den Stand der Technik Bezug genommen.

Zunächst einmal ist wesentlich, daß die gezeigte Kupplungs-Brems-Kombination mit dem Kühlmedium "Luft" im Trockenlauf betrieben wird.

Dies bedeutet, daß die Reibpaarungen 2a-2b bzw. 3a-3b jeweils für sich ausschließlich in Luftumgebung fahren und die zwischen den Reibbelägen befindliche Luft die Kühlung zu besorgen hat. Darüber hinaus ist durch die möglich gewordene kleinere Bauweise auch die Wärmeerzeugung wegen des verringerten Massenträgheitsmoments geringer.

Im vorliegenden Fall wird allerdings die Luft aus dem Reservoir einer vorbestimmten Umgebung 11 entnommen und als Luftmassenstrom über ein jeweiliges Kanalsystem 17,18a,b,c mittels einer Druckdifferenz 15,16 sowohl über die Reibpaarflächen der Kupplung 4 als auch über die Reibpaarflächen der Bremse 5 zumindest dann geführt, wenn die jeweiligen Reibpaarungen 2a-2b;3a-3b offen sind. Anschließend wird der Kühlluftstrom wieder in das Reservoir einer Umgebung 12 entlassen.

Insoweit wird infolge der angelegten Druckdifferenz, die an vorbestimmten Stellen vor und hinter den Reibpaarungen gemessen wird, ein Luftmassenstrom in Bewegung gesetzt, der zumindest so lange durch die geöffneten Reibpaarungen strömt, bis diese in gegenseitigen Reibschlußkontakt gelangen.

Die bei diesem Vorgang eintretenden Wärmeübergangsmechanismen sorgen für einen Abtransport der sich an den Reibbelägen einstellenden Wärme, zumindest so lange, wie es nicht zum Haftreibschluß zwischen den Reibbelägen gekommen ist.

Insbesondere über die angelegte Potentialdifferenz lassen sich darüber hinaus die Wärmeübergangsmechanismen auch optimieren, weil die Wärmeübergangszahlen auch eine Funktion der Lufttransportgeschwindigkeit sind.

Innerhalb der von den Reibbelägen ertragbaren Temperaturen steht somit über eine Variation der Luftstromgeschwindigkeit ein zusätzlicher Parameter zur notwendigen Kühlung der beteiligten Reibpaarungen zur Verfügung.

Figur 1 zeigt darüber hinaus die Besonderheit, daß vor der Austrittsöffnung 30 des Kanalsystems 17,18a,b,c in die Umgebung 12 ein Staubfilter 13 angeordnet ist.

Dieses Ausführungsbeispiel zeigt insoweit ein halboffenes System, bei welchem zwar der Kühlluftstrom ein- bzw. austritt, der an den Reibpaarungen erzeugte Abrieb jedoch in dem Staubfilter 13 zurückgehalten wird.

Dieser Staubfilter 13 kann als sogenannter Feinstaubfilter ausgelegt sein, um die Umweltbelastung möglichst gering zu halten.

Darüber hinaus kann vorgesehen sein, vor der Eintrittsöffnung 25 in das Kanalsystem 17,18a,b,c eine Filteranordnung 14 anzuordnen, in welcher die in das System eintretende Kühlluft vorgefiltert wird.

Die für die Erfindung notwendige Potentialdifferenz läßt sich entweder durch einen eingangsseitig angeordneten Druckluftanschluß oder eine ausgangsseitig angeordnete Saugpumpe, vorzugsweise ein Gebläse, realisieren.

Darüber hinaus zeigt die Figur die Besonderheit, daß das Kanalsystem 17,18a,b,c axial von außen in die Maschinenwelle 9 eingebracht ist. Von dem in der Maschinenwelle 9 verlaufenden Axialkanal 17 gehen die Stichkanäle 18a ab, welche mit gleich orientierten Kanälen im Kupplungskörper bzw. Bremsenkörper kämmen.

Dort ist ein wiederum axial verlaufender Sammelkanal 18b vorgesehen, von welchem aus sich - entsprechend der Anzahl der jeweiligen Reibpaarungen - entsprechend viele Verteilerkanäle 18c in Richtung zu den Reibpartnern erstrecken.

Der Axialkanal 17 kann zweckmäßigerweise im Zentrum, d.h. auf der Längsmittellinie 19 der Maschinenwelle 8 liegen.

Hierdurch lassen sich aufwendige Drehdurchführungen zumindest dann ersparen, wenn auf der Zuluftseite des Kanalsystems 17,18a,b,c mit einem Druckluftanschluß gearbeitet wird.

Hier ist weiterhin gezeigt, daß die Reibpaarflächen 2a-2b;3a-3b radial von innen nach außen durchströmt werden.

Diese Maßnahme dient dem Zweck, die sowohl auf den Luftstrom als auch auf die Abriebteilchen wirkenden Fliehkräfte für den Kühlzweck zu nutzen.

Ein derartiges Kühlsystem kommt daher mit einer geringeren Gebläseleistung aus, weil der Luftmassenstrom nicht entgegen der auf ihn wirkenden Fliehkräfte gefördert werden muß.

Darüber hinaus zeigt Fig. 1 zwei mögliche Ausführungsformen.

Das Reservoir der Umgebung 11 zur Luftentnahme kann übereinstimmend mit dem Reservoir der Umgebung 12 zur Luftentlassung die Maschinenhalle 20 sein.

Da das vorliegende System als halboffenes System mit dem Staubfilter 13 zusammenwirkt, wird die Gefahr von Bronchialerkrankungen für das Personal der Maschinenhalle erheblich gemindert.

Die beim Abrieb zwangsläufig entstehenden Staubpartikel werden im Staubfilter zurückgehalten und geraten so nicht in die Atemluft.

Darüber hinaus kann, wie gestrichelt gezeigt, das Reservoir der Umgebung 11 zur Luftentnahme zusammen mit dem Reservoir der Umgebung 12 zur Luftentlassung übereinstimmend ein in sich abgeschlossener Kreislauf sein. Innerhalb dieses Kreislaufs 21 wird der Kühlluftstrom zirkulierend geführt.

Auch hierfür ist eine entsprechende Druckerhöhungsvorrichtung 16 vorgesehen, die an geeigneter Stelle eingebaut wird.

Zusätzlich kann der Kühlluftmassenstrom auch bei dieser Weiterbildung so einstellbar sein, daß das System ohne den optional gezeigten zusätzlichen Wärmetauscher zuverlässig funktioniert.

Ergänzend kann auch in diesem geschlossenen System ein Filter 13 vorgesehen sein, z.B. um eine Anreicherung von Abriebpartikeln im umlaufenden Luftmassenstrom zu vermeiden.

Darüber hinaus zeigt das Ausführungsbeispiel noch die Besonderheit, daß die Bremseinheit als Sicherheitsbremse ausgelegt ist.

Hierzu wird die Bremse 5 in Schließrichtung 7 unter die Vorspannkraft eines Federpaketes 6 gestellt.

Das Federpaket 6 besteht aus einer Vielzahl von rotationssymmetrisch zur Längsmittellinie 19 der Maschinenwelle 8 angeordneten Druckfedern, die durch eine mit Druckmittel beaufschlagte Kolben-Zylinder-Einheit zusammengedrückt werden und dies so lange bleiben, bis der hydraulische Druck entlastet wird.

Sollte dies einmal unvorhergesehener Weise geschehen, wird das Federpaket 6 die Bremse schließen und die Anlage zum Stillstand bringen.

Insoweit wird auf den Stand der Technik verwiesen.

Neu ist allerdings auch die Kombination der vorliegenden Erfindung mit Reibpaarungen, bei denen die beteiligten Reibflächenpartner 2a-b;3a-b einerseits aus organischem Material und andererseits aus Aluminiumkeramik oder anderem Hochleistungsreibwerkstoffen mit hohen zulässigen Betriebstemperaturen bestehen.

Derartige Reibpaarungen können grundsätzlich höhere Betriebstemperaturen aushalten, als herkömmliche Reibpaarungen unter Verwendung von Stahl.

Da die Kühlleistung der vorliegenden Kupplung-Brems-Kombination bereits aufgrund der eingestellten Luftmassenströme in weiten Bereichen variabel ist, lassen sich höhere Betriebstemperaturen bei einem verbesserten Kühleffekt fahren.

Die damit notwendige Baugröße der Kupplungs-Brems-Kombination dürfte daher bei gleicher Reibleistung deutlich kleiner werden.

Damit sinken allerdings auch die an eine derartige Kupplungs-Brems-Kombination gekoppelten Massenträgheitsmomente.

Von besonderem Vorteil ist eine Luftführung, bei welcher die kalte Zuluft in einen mitrotierenden Bestandteil der gesamten Baugruppe, wie im vorliegenden Fall die Maschinenwelle 8, zugeführt wird.

Aufgrund der Rotationsbewegung und der radial verlaufenden Stichkanäle 18a,18c wird der Luftmassenstrom fliehkraftbedingt beschleunigt und sorgt auf diese Weise für einen guten Kühleffekt.

Demgegenüber steht allerdings das Maschinengehäuse 9 still.

Links an das Maschinengehäuse 9 ist die Bremsglocke 40 angeschraubt, welche naturgemäß ebenfalls stillstehen muß.

Da zwischen dem auf dem Maschinengehäuse 9 im rechten Bildbereich gelagerten, nicht näher bezeichneten Schwungrad 41 und dem links an das Schwungrad 41 angeflanschten glockenartigen Gehäuse 42 eine drehstarre Verbindung besteht, muß sich das glockenartige Gehäuse 42 zusammen mit dem Schwungrad 41 drehen können.

Nachdem also die kalte Zuluft die einzelnen Lamellenpackete je nach Öffnungszustand durchströmt hat, gelangt sie in die von der Innenwandung des mitdrehenden Gehäuses 42 begrenzte Umgebung der Kupplungs-Brems-Kombination 1, von wo aus sie in Richtung zum Luftauslaß geführt werden muß.

Die mit der Austrittsöffnung 30 kommunizierende Umgebung 12 ist hier über ein Leitungssystem 43,44,45,46 mit dem stillstehenden Maschinengehäuse verbunden.

Zu diesem Zweck ragt von der stillstehenden Bremsglocke 40 ein Einschraubstutzen 47 in den Raum zwischen der Bremsglocke 40 und dem mitdrehenden Gehäuse 42. Die Eintrittsöffnung des Stutzens 47 ist so ausgerichtet, dass dessen Einlassöffnung möglichst senkrecht zu den Stromlinien der ankommenden Kühlluft steht, welche die Lamellenpakete soeben verlassen hat.

Der Stutzen setzt sich dann in einen Radialkanal 43 fort, der in die stillstehende Bremsglocke 40 eingebracht ist, von wo aus letzterer durch einen Axialkanal 44 angeschnitten wird, der sich sozusagen über die Breite des Schwungrades bis in den außerhalb des Schwungrads liegenden Bereich des Maschinengehäuses 9 erstreckt.

Von dort verläßt die aufgewärmte Kühlluft über einen weiteren Radialkana145 das Maschinengehäuse 9 und wird über das Anschlußkanalsystem 46 letztlich dem Filter 13 zugeführt.

Maßgeblich ist insoweit daher auch, daß die zugeführte noch nicht erwärmte Kühlluft in den rotierenden Bereich der Kupplungs-Brems-Kombination eingeführt wird und letztere über das stillstehende Maschinengehäuse 9 verläßt.

Anzumerken ist noch die Anordnung mehrerer Stutzen 47 am Umfang der Bremsglocke, so daß für eine effektive Abfuhr der aufgewärmten Kühlluft gesorgt ist.

### Bezugszeichenliste:

- 1: Kupplungs-Brems-Kombination
- 2a: erste Reibscheibe Bremse
- 2b: zweite Reibscheibe Bremse
- 3a: erste Reibscheibe Kupplung
- 3b: zweite Reibscheibe Kupplung
- 4: Kupplung
- 5: Bremse
- 6: Federpaket
- 7: Schließrichtung, Bremse
- 8: Maschinenwelle
- 9: Maschinengehäuse
- 10: Maschinenabtrieb
- 11: Umgebung zur Luftentnahme
- 12: Umgebung zur Luftentlassung
- 13: Staubfilter Luftausgang
- 14: Filteranordnung Luftzutritt
- 15: Druckluftanschluß
- 16: Saugpumpe, Gebläse, Verdichter
- 17: Axialkanal
- 18a: Stichkanal
- 18b: Sammelkanal
- 18c: Verteilerkanal
- 19: Längsmittellinie, Zentrum von 8
- 20: Maschinenhalle
- 21: geschlossener Kreislauf
- 25: Eintrittsöffnung ins Kanalsystem
- 30: Austrittsöffnung aus Kanalsystem

- 40: Bremsglocke
- 41: Schwunggrad
- 42: Gehäuse
- 43: Radialkanal
- 44: Axialkanal
- 45: Radialkanal
- 46: Anschlußkanalsystem
- 47: Stutzen

## Patentansprüche

1. Kupplungs-Brems-Kombination (1) mit Paarungen von Reibscheiben (2a,2b;3a,3b) die sowohl bei der Kupplung (4) als auch bei der Bremse (5) mit dem Kühlmedium "Luft" im Trockenlauf betrieben werden und drehfest einerseits mit der Maschinenwelle (8) und andererseits mit dem Maschinengehäuse (9) bzw. dem Maschinenabtrieb (10) verbunden sind, **dadurch gekennzeichnet, daß** die "Luft" aus dem Reservoir einer vorbestimmten Umgebung (11) entnommen und als Luftmassenstrom über ein jeweiliges Kanalsystem (17,18a,b,c) mittels einer Druckdifferenz (15;16) sowohl über die Reibpaarflächen der Kupplung (4) als auch über die Reibpaarflächen der Bremse (5) zumindest in jeweils offenem Zustand der jeweiligen Reibpaarungen (2a-2b;3a-3b) geführt sowie anschließend wieder in das Reservoir einer Umgebung entlassen wird.

2. Kupplungs-Brems-Kombination nach Anspruch 1, **dadurch gekennzeichnet, daß** vor der Austrittsöffnung (30) des Kanalsystems (17,18a,b,c) in die Umgebung (12) ein Staubfilter (13) angeordnet ist.

3. Kupplungs-Brems-Kombination nach Anspruch 1, **dadurch gekennzeichnet, daß** der Staubfilter (13) als Feinstaubfilter ausgelegt ist.

4. Kupplungs-Brems-Kombination nach einem der Ansprüche 1 bis 3, **dadurch gekennzeichnet, daß** vor der Eintrittsöffnung (25) des Kanalsystems (17,18a,b,c) in die Kupplungs-Brems-Kombination (1) eine Filteranordnung (14) für den Luftzutritt vorgesehen ist.

5. Kupplungs-Brems-Kombination nach einem der Ansprüche 1 bis 4, **dadurch gekennzeichnet, daß** die Eintrittsöffnung (25) des Kanalsystems (17,18a,b,c) in die Kupplungs-Brems-Kombination (1) über einen Druckluftanschluß (15) mit Druckluft beaufschlagbar ist.

6. Kupplungs-Brems-Kombination nach einem der Ansprüche 1 bis 4, **dadurch gekennzeichnet, daß** das Kanalsystem (17,18,a,b,c) ausgangsseitig der Kupplungs-Brems-Kombination (1) mit dem Ansaugdruck einer Saugpumpe (16) beaufschlagbar ist.

7. Kupplungs-Brems-Kombination nach einem der Ansprüche 1 bis 6, **dadurch gekennzeichnet, daß** das Kanalsystem (17,18a,b,c) axial von außen in die Maschinenwelle (9) und von dort über radialorientierte Stichkanäle (18a) zu den Reibpaarflächen (2a-2b;3a-3b) eingebracht ist.

8. Kupplungs-Brems-Kombination nach Anspruch 7, **dadurch gekennzeichnet, daß** der Stichkanal (18a) in einem vorwiegend axialorientierten Sammelkanal (18b) mündet.

9. Kupplungs-Brems-Kombination nach Anspruch 8, **dadurch gekennzeichnet, daß** vom Sammelkanal (18b) ausgehend mehrere Verteilerkanäle (18c) zu den Reibpaarungen von Kupplung (4) bzw. Bremse (5) ausgebildet sind.

10. Kupplungs-Brems-Kombination nach einem der Ansprüche 7 bis 9, **dadurch gekennzeichnet, daß** zumindest ein Axialkanal (17) im Zentrum (19) der Maschinenwelle (8) verläuft.

11. Kupplungs-Brems-Kombination nach einem der Ansprüche 7 bis 10, **dadurch gekennzeichnet, daß** die Reibpaarflächen (2a-2b;3a-3b) radial von innen nach außen durchströmt werden..

12. Kupplungs-Brems-Kombination nach einem der Ansprüche 1 bis 11, **dadurch gekennzeichnet, daß** das Reservoir der Umgebung (11) zur Luftentnahme mit dem Reservoir der Umgebung (12) zur Luftentlassung übereinstimmend die Maschinenhalle (20) ist.

13. Kupplungs-Brems-Kombination nach einem der Ansprüche 1 bis 11, **dadurch gekennzeichnet, daß** das Reservoir der Umgebung (11) zur Luftentnahme zusammen mit dem Reservoir der Umgebung (12) zur Luftentlassung übereinstimmend ein in sich abgeschlossener Kreislauf (21) ist, innerhalb dessen die Luft zirkulierend geführt wird.

14. Kupplungs-Brems-Kombinätion nach einem der Ansprüche 1 bis 13, **dadurch gekennzeichnet, daß** die Bremse (5) als Sicherheitsbremse ausgelegt ist, die in Schließrichtung (7) unter der Vorspannkraft eines Federpaketes (6) steht und hydraulisch belüftet wird.

15. Kupplungs-Brems-Kombination nach einem der Ansprüche 1 bis 14, **dadurch gekennzeichnet, daß** die Reibflächenpaarungen (2a-2b;3a-3b) einerseits aus organischem Material und andererseits aus Aluminiumkeramik bestehen.

16. Kupplungs-Brems-Kombination nach einem der Ansprüche 1 bis 15, **dadurch gekennzeichnet, daß** die aus der vorbestimmten Umgebung (11) entnommene Kühlluft über ein mitrotierendes Bauteil der Kupplungs-Brems-Kombination (1) zugeführt wird und die Kupplungs-Brems-Kombination (1) über ein im stillstehenden Maschinengehäuse (9) vorgesehenes Kanalsystem (43,44,45,46) verläßt.
